# EUROPEAN PATENT APPLICATION

(11) **EP 3 151 553 A1**
(43) Date of publication of application: **05.04.2017**
(21) Application number: 16190966.8
(22) Date of filing: 27.09.2016
(51) Int. Cl.: H04N 9/31

(54) **A SELF-CALIBRATING PROJECTION APPARATUS AND PROCESS**

(30) Priority: 30.09.2015 US 201514870059
(71) Applicant: Hand Held Products, Inc., Fort Mill, SC 29707 (US)
(72) Inventor: GERMAINE, Gennady, Morris Plains, NJ New Jersey 07950 (US); COLAVITO, Stephen J, Morris Plains, NJ New Jersey 07950 (US); PIERCE, Robert, Morris Plains, NJ New Jersey 07950 (US); RUEBLINGER, Gregory, Morris Plains, NJ New Jersey 07950 (US)
(74) Representative: Houghton, Mark Phillip

(57) **Abstract**

A self-calibrating projection apparatus (10) is provided. The projection apparatus includes a projector (12) with a memory, an image scanner (14), a calibration image (16), and a controller for analyzing quality characteristics of projected images and for changing projector settings. The controller is communicatively linked to the image scanner (14) and to the projector (12). The calibration image (16) has predetermined optimal quality characteristics, the calibration image (16) residing in the projector memory. The projector (12) is configured to project the calibration image (16) on a surface (18) upon being activated. The image scanner (14) is configured to acquire the projected calibration image and to transfer the acquired image to the controller. The controller is configured to analyze the quality characteristics of the projected calibration image in comparison to the predetermined optimal quality characteristics. The controller is further configured to change the projector settings so that the calibration image will be projected with the predetermined optimal quality characteristics.

## Description

### FIELD OF THE INVENTION

The present invention relates to projection devices and in particular to the automatic adjustment of the projected images.

### BACKGROUND

Generally speaking a projection device needs adjustment of focus, brightness, contrast, color combination, and image skew, among other parameters. Most projection devices rely on manual controls to address each quality parameter. The adjustments therefore rely on the particular human perception of the one doing the manual adjustment. Other viewers of the projected images may view these quality parameters differently.

Therefore, a need exists for an impartial quality adjustment of projected images. In particular, what is needed is an automatic quality parameter adjustment of projected images upon activation of the projector.

### SUMMARY

Accordingly, in one aspect, the present invention embraces a self-calibrating projection apparatus.

In an exemplary embodiment, the self-calibrating projection apparatus includes a projector with a memory capability, an image scanner, a calibration image having predetermined optimal quality characteristics residing in the projector memory, and a controller for analyzing quality characteristics and for changing projector settings. The controller is communicatively linked to the image scanner and to the projector. The projector is configured to project the calibration image on a surface upon being activated. The image scanner is configured to acquire the projected calibration image and to transfer the acquired image to the controller. The controller is configured to analyze the quality characteristics of the projected calibration image in comparison to the predetermined optimal quality characteristics. The controller is configured to change projector settings in order to adjust the calibration image to meet the optimal quality characteristics based upon the controller analyzing the quality characteristics.

In another exemplary embodiment, the configuration of the system consisting of: the projector being configured to project the calibration image upon being activated, the image scanner being configured to acquire the projected calibration image and to transfer the acquired image to the controller, the controller being configured to analyze the quality characteristics of the projected calibration image in comparison to the predetermined optimal quality characteristics, and the controller being configured to change the projector settings to adjust the calibration image to meet the optimal quality characteristics, constitute a routine. The routine is repeated until the quality characteristics of the projected calibration image are substantially similar to the optimal quality characteristics of the calibration image.

In another exemplary embodiment, the predetermined quality characteristics include focus, brightness, contrast, hue, tint, keystone, and color combination.

In another exemplary embodiment, the controller is provided with an algorithm to analyze the projected calibration image quality characteristics with predetermined optimal quality characteristics.

In another exemplary embodiment, the controller is comprised of a primary controller and at least one auxiliary controller. The primary controller is configured to implement the algorithm. The algorithm is configured for automated adjustment of the projector settings based on the algorithm analysis.

In yet another exemplary embodiment, the algorithm is provided with means of activation. The activation means are selected from a user action and an automatic action based upon the projector being activated.

In another exemplary embodiment, the controller is a central processing unit.

In a further exemplary embodiment, the controller is comprised of multiple controllers.

In yet a further exemplary embodiment, the controller is comprised of a projection controller and an image-capture controller. The projection controller is resident in the projector. The image-capture controller is resident in the image scanner. The image-capture controller is configured to analyze the quality characteristics of the projected calibration image. Further, the image-capture controller is configured to send commands to the projection controller based upon analyzing the projected calibration image quality characteristics in comparison to the predetermined optimal quality characteristics of the calibration image. The projection controller is configured to change projector settings based upon the commands from the image-capture controller.

In another exemplary embodiment, the projector and the image scanner are communicatively linked discrete devices.

In another exemplary embodiment, the image scanner includes an image sensor for acquiring projected images.

In yet another exemplary embodiment, the image scanner is provided with barcode scanning capability.

In another aspect, the present invention embraces a process for automatically calibrating a projection device.

In an exemplary embodiment, the process includes the steps of: projecting a calibration image onto a surface, acquiring the projected calibration image with an image-scanner, sending the acquired image to a controller, analyzing the quality characteristics of the acquired projected calibration image in comparison to the predetermined optimal quality characteristics of the calibration image, and changing the projector settings to adjust the calibration image to meet the optimal quality characteristics based on the analyzing step. The calibration image has predetermined optimal quality characteristics.

In another exemplary embodiment, the process further includes the step of repeating the process until the quality characteristics of the projected calibration image are substantially similar to the predetermined optimal quality characteristics of the calibration image.

In another exemplary embodiment, the optimal quality characteristics include focus, brightness, contrast, hue, tint, keystone, and color combination. Further, the analyzing step is accomplished by an algorithm provided to the controller.

In another exemplary embodiment, the projector settings correspond to the quality characteristics.

In yet another exemplary embodiment, the analyzing step includes comparing each of the quality characteristics of the projected image to each of the predetermined optimal quality characteristics individually. The changing step includes changing each of the projector settings corresponding to each of the quality characteristics individually.

In a further exemplary embodiment, the analyzing step is accomplished with an algorithm.

In another exemplary embodiment, the analyzing step and the changing step are accomplished with at least one controller and with an algorithm having an automated adjustment function.

In yet another exemplary embodiment, the analyzing step is accomplished by an image-capture controller. The changing step is accomplished by a projection controller. Further, the analyzing step includes the step of commanding the projection controller to make projector adjustments.

The foregoing illustrative summary, as well as other exemplary objectives and/or advantages of the invention, and the manner in which the same are accomplished, are further explained within the following detailed description and its accompanying drawings.

### BRIEF DESCRIPTION OF THE DRAWINGS

Figure 1 schematically depicts an exemplary embodiment of the self-calibrating projection apparatus in operation according to the present invention.
Figure 2 schematically depicts the components of the self-calibrating projection apparatus in accordance with an exemplary embodiment of the invention in which there is one controller.
Figure 3 schematically depicts the components of the self-calibrating projection apparatus in accordance with another exemplary embodiment of the invention in which there are multiple controllers.
Figure 4 depicts in a flowchart the process for automatically calibrating a projection device according to an exemplary embodiment of the invention.
Figure 5 depicts in a flowchart the process for automatically calibrating a projection device according to another exemplary embodiment of the invention.

### DETAILED DESCRIPTION

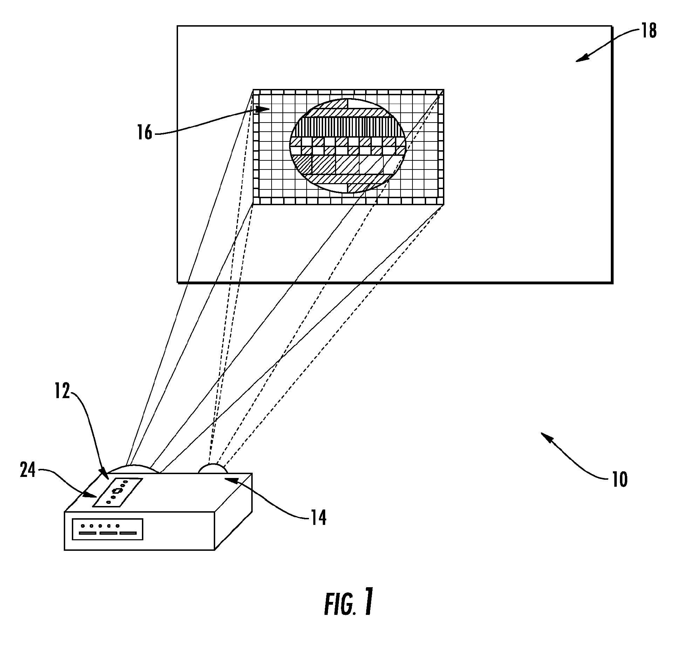

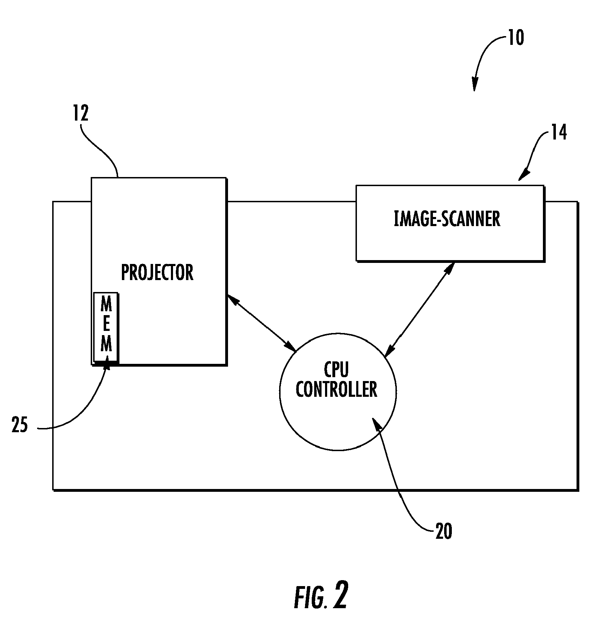

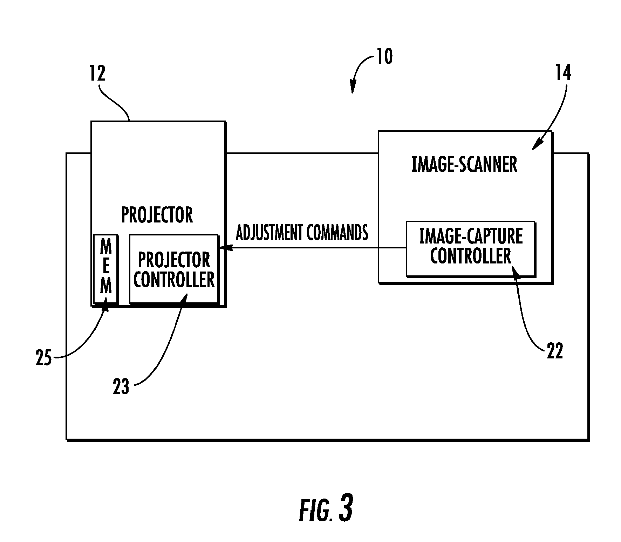

The present invention embraces a self-calibrating projection apparatus. Referring to Figure 1, in an exemplary embodiment, the self-calibrating projection apparatus (10) includes a projector (12) with a memory capability, an image scanner (14), a calibration image (16) having predetermined optimal quality characteristics residing in the projector memory, and a controller for analyzing quality characteristics and for changing projector (12) settings. Figures 2 & 3 show a schematic of the self-calibrating projection apparatus (10) with different options for the controller. These will be discussed hereinafter. The controller is communicatively linked to the image scanner (14) and to the projector (12). The projector (12) is configured to project the calibration image (16) on a surface upon being activated. Activation of the projector (12) can be achieved by pressing control buttons (24) such as on/off buttons, or can be achieved with a remote control (not shown). The image scanner (14) is configured to acquire the projected calibration image (16) and to transfer the acquired image to the controller. The controller is configured to analyze the quality characteristics of the projected calibration image (16) in comparison to the predetermined optimal quality characteristics. The controller is configured to change projector settings in order to adjust the calibration image (16) to meet the optimal quality characteristics based upon the controller analyzing the quality characteristics.

The calibration image (16) may be any suitable image which demonstrates qualities to include color, brightness, contrast, hue, tint, and color combination. The actual placement of the apparatus (10) and in particular the projector (12) with respect to the surface (18) will affect the focus and keystone of the calibration image (16) projected onto the surface (18). Keystone correction allows the image to be corrected when a projector, or more particularly, the optical axis of the projector is not perfectly perpendicular to the surface on which images are to be projected. In Figure 1, the calibration image (16) is depicted as a typical projection test pattern as is known in the art.

In the Figure 1, the projector (12) is activated via the controls (24), and the projector (12) portion of the self-calibrating apparatus (10) is projecting the calibration image (16) onto a surface (18). The image scanner (14) acquires the calibration image (16) with an image sensor (not shown), for example, the image-scanner (14) acquiring being shown with dotted lines.

The controller function of the self-calibrating apparatus (10) is best illustrated in the schematics of Figures 2 and 3.

Referring now to Figure 2, still in conjunction with and referring also to components numbered in Figure 1, in an exemplary embodiment, after the image scanner (14) acquires the calibration image (16), the image scanner (14) sends the acquired calibration image (16) to a controller (20) to be analyzed with respect to the predetermined optimal quality characteristics of the calibration image. The controller (20) may be part of a central processing unit (CPU) which will both analyze the image and control the projector settings to readjust the projector (12) so that the calibration image (16) will appear on the surface (18) when projected with the predetermined optimal quality characteristics. The projector (12) is provided with a memory (25) in which the calibration image (16) is resident and ready to be projected. The self-calibrating apparatus (10) repeats the projection of calibration image (16), the analysis thereof and the changing of the projector (12) settings until the quality characteristics of the projected calibration image (16) substantially correspond to the predetermined optimal quality characteristics of the calibration image (16). These actions by the projector (12), the image scanner (14), and the controller (20) can be considered a routine. The routine will be repeated until an acceptable calibration image (16) is projected. Then the projector (12) is calibrated for any image, with the only user action being to originally activate the apparatus (10).

In another exemplary embodiment, referring to Figure 3, also in conjunction with and referring to components depicted in Figure 1, the self-calibrating projection apparatus (10) is schematically depicted. In the instant embodiment, the controller is comprised of multiple controllers.

In an exemplary embodiment, the controller is comprised of an image-capture controller (22) which is resident in the image scanner (14) and a projector controller (23) which is resident in the projector (12). The projector controller (23) changes the settings on the projector (12) which control for example quality characteristics. The image-capture controller (22) analyzes the qualities of the calibration image (16) acquired by the image scanner (14) and compares those qualities to the predetermined optimal qualities of the calibration image (16). Based on the analysis, the image-capture controller (22) sends commands to the projector controller (23) to change the projector settings. The process is repeated until the image-capture controller (22) has no more adjustment commands to send the projector controller (23), that is, when the quality characteristics of the projected calibration image (16) substantially correspond to the predetermined optimal quality characteristics of the calibration image (16).

The analysis of the acquired calibration image is accomplished by a controller, either a controller (20) in a CPU as in Figure 2, or in another controller such as the image-capture controller (22) of Figure 3. The analysis may be accomplished in either case with an algorithm which compares the quality characteristics of the acquired image with the predetermined quality characteristics. Depending on the deviation from the predetermined quality characteristics, the algorithm will determine what projector setting changes need to be made. Where the algorithm resides for example in a primary controller or in a CPU, the algorithm may also be configured for automated adjustment of the projector settings. In the case where the algorithm is resident in an image-capture controller, the algorithm is configured to send commands to the projector controller to change projector settings.

In another exemplary embodiment, the algorithm is provided with activation means. This could be an automatic activation when the self-calibrating apparatus or the projector is activated or turned on. Alternatively, the activation means could be achieved by a specific user action. Referring back to Figure 1, the user action could be pressing a projector control button (24) on the apparatus (10), or activating the algorithm by a remote control (not shown) linked to the apparatus (10). The activation means may also be accomplished by scanning a special barcode with the image scanner (14). Alternately, the activation means may be achieved by sending a command from an external computer (not shown). The external computer may have a wired connection to the projection apparatus (10) or may be a wireless connection; the projection apparatus being provided with wireless means.

While the heretofore embodiments describe and depict the self-calibrating projection apparatus as a single unit, nevertheless, in an exemplary embodiment, the projector portion of the apparatus and the image scanner portion of the apparatus are discrete devices which are communicatively linked. In the present embodiment, a primary controller and algorithm would preferably be resident on the image scanner portion of the apparatus. A secondary controller, resident on the projector portion of the apparatus would be provided with means to receive wireless commands pertaining to changing projector settings from the primary controller on the image scanner portion of the apparatus.

The present invention also embraces a process for automatically calibrating a projection device.

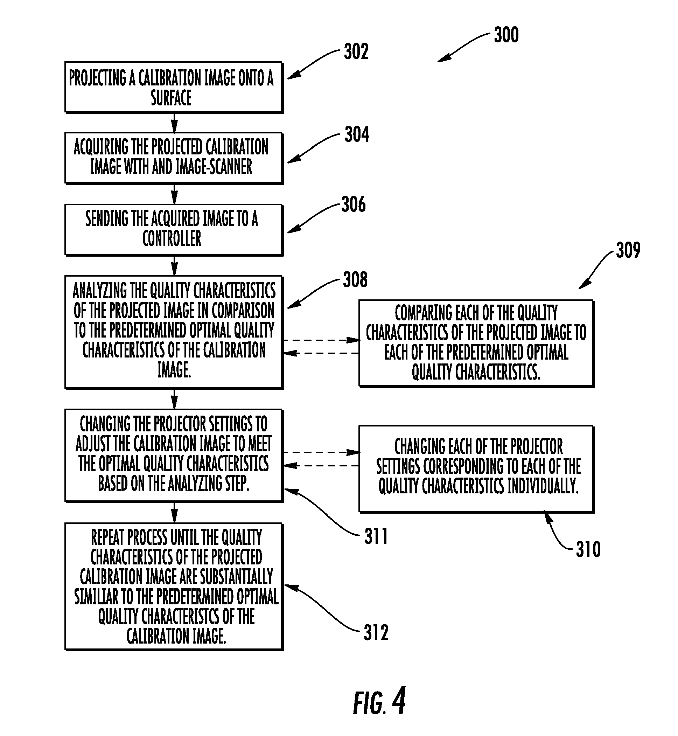

Referring to Figure 4, in an exemplary embodiment, the process (300) includes the steps of: (302) projecting a calibration image onto a surface, (304) acquiring the projected calibration image with an image-scanner, (306) sending the acquired image to a controller, (308) analyzing the quality characteristics of the acquired projected calibration image in comparison to the predetermined optimal quality characteristics of the calibration image, and (311) changing the projector settings to adjust the calibration image to meet the optimal quality characteristics based on the analyzing step. The calibration image has predetermined optimal quality characteristics.

In another exemplary embodiment, the process further includes the step of (312) repeating the process until the quality characteristics of the projected calibration image are substantially similar to the predetermined optimal quality characteristics of the calibration image.

Generally the quality characteristics being analyzed include focus, brightness, contrast, hue, tint, keystone, and color combination. Further, the analyzing step is preferably accomplished by an algorithm provided to the controller. The projector settings can be changed to adjust these quality characteristics.

In yet another exemplary embodiment, for example, the (308) analyzing step may include the step of (309) comparing each of the quality characteristics of the projected image to each of the predetermined optimal quality characteristics individually. The (311) changing step includes the step of (310) changing each of the projector settings corresponding to each of the quality characteristics individually.

In another exemplary embodiment, the (308) analyzing step and the (311) changing step may be accomplished with at least one controller and with an algorithm having an automated adjustment function.

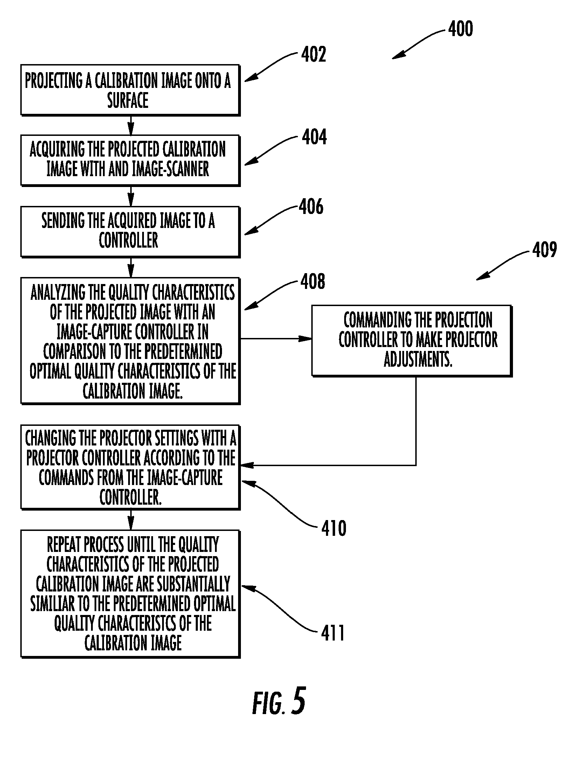

Referring now to Figure 5, in another exemplary embodiment, the process (400) includes the steps of (402) projecting a calibration image onto a surface, (404) acquiring the projected calibration image with an image-scanner, (406) sending the acquired image to a controller, (408) analyzing the quality characteristics of the acquired projected calibration image with an image-capture controller in comparison to the predetermined optimal quality characteristics of the calibration image, (409) commanding the projection controller to make projector adjustments, (410) changing the projector settings with a projector controller according to the commands from the image-capture controller, and (411) repeating the process until the quality characteristics of the projected calibration image are substantially similar to the predetermined optimal quality characteristics of the calibration image.

To supplement the present disclosure, this application incorporates entirely by reference the following commonly assigned patents, patent application publications, and patent applications:
U.S. Patent No. 6,832,725; U.S. Patent No. 7,128,266;
U.S. Patent No. 7,159,783; U.S. Patent No. 7,413,127;
U.S. Patent No. 7,726,575; U.S. Patent No. 8,294,969;
U.S. Patent No. 8,317,105; U.S. Patent No. 8,322,622;
U.S. Patent No. 8,366,005; U.S. Patent No. 8,371,507;
U.S. Patent No. 8,376,233; U.S. Patent No. 8,381,979;
U.S. Patent No. 8,390,909; U.S. Patent No. 8,408,464;
U.S. Patent No. 8,408,468; U.S. Patent No. 8,408,469;
U.S. Patent No. 8,424,768; U.S. Patent No. 8,448,863;
U.S. Patent No. 8,457,013; U.S. Patent No. 8,459,557;
U.S. Patent No. 8,469,272; U.S. Patent No. 8,474,712;
U.S. Patent No. 8,479,992; U.S. Patent No. 8,490,877;
U.S. Patent No. 8,517,271; U.S. Patent No. 8,523,076;
U.S. Patent No. 8,528,818; U.S. Patent No. 8,544,737;
U.S. Patent No. 8,548,242; U.S. Patent No. 8,548,420;
U.S. Patent No. 8,550,335; U.S. Patent No. 8,550,354;
U.S. Patent No. 8,550,357; U.S. Patent No. 8,556,174;
U.S. Patent No. 8,556,176; U.S. Patent No. 8,556,177;
U.S. Patent No. 8,559,767; U.S. Patent No. 8,599,957;
U.S. Patent No. 8,561,895; U.S. Patent No. 8,561,903;
U.S. Patent No. 8,561,905; U.S. Patent No. 8,565,107;
U.S. Patent No. 8,571,307; U.S. Patent No. 8,579,200;
U.S. Patent No. 8,583,924; U.S. Patent No. 8,584,945;
U.S. Patent No. 8,587,595; U.S. Patent No. 8,587,697;
U.S. Patent No. 8,588,869; U.S. Patent No. 8,590,789;
U.S. Patent No. 8,596,539; U.S. Patent No. 8,596,542;
U.S. Patent No. 8,596,543; U.S. Patent No. 8,599,271;
U.S. Patent No. 8,599,957; U.S. Patent No. 8,600,158;
U.S. Patent No. 8,600,167; U.S. Patent No. 8,602,309;
U.S. Patent No. 8,608,053; U.S. Patent No. 8,608,071;
U.S. Patent No. 8,611,309; U.S. Patent No. 8,615,487;
U.S. Patent No. 8,616,454; U.S. Patent No. 8,621,123;
U.S. Patent No. 8,622,303; U.S. Patent No. 8,628,013;
U.S. Patent No. 8,628,015; U.S. Patent No. 8,628,016;
U.S. Patent No. 8,629,926; U.S. Patent No. 8,630,491;
U.S. Patent No. 8,635,309; U.S. Patent No. 8,636,200;
U.S. Patent No. 8,636,212; U.S. Patent No. 8,636,215;
U.S. Patent No. 8,636,224; U.S. Patent No. 8,638,806;
U.S. Patent No. 8,640,958; U.S. Patent No. 8,640,960;
U.S. Patent No. 8,643,717; U.S. Patent No. 8,646,692;
U.S. Patent No. 8,646,694; U.S. Patent No. 8,657,200;
U.S. Patent No. 8,659,397; U.S. Patent No. 8,668,149;
U.S. Patent No. 8,678,285; U.S. Patent No. 8,678,286;
U.S. Patent No. 8,682,077; U.S. Patent No. 8,687,282;
U.S. Patent No. 8,692,927; U.S. Patent No. 8,695,880;
U.S. Patent No. 8,698,949; U.S. Patent No. 8,717,494;
U.S. Patent No. 8,717,494; U.S. Patent No. 8,720,783;
U.S. Patent No. 8,723,804; U.S. Patent No. 8,723,904;
U.S. Patent No. 8,727,223; U.S. Patent No. D702,237;
U.S. Patent No. 8,740,082; U.S. Patent No. 8,740,085;
U.S. Patent No. 8,746,563; U.S. Patent No. 8,750,445;
U.S. Patent No. 8,752,766; U.S. Patent No. 8,756,059;
U.S. Patent No. 8,757,495; U.S. Patent No. 8,760,563;
U.S. Patent No. 8,763,909; U.S. Patent No. 8,777,108;
U.S. Patent No. 8,777,109; U.S. Patent No. 8,779,898;
U.S. Patent No. 8,781,520; U.S. Patent No. 8,783,573;
U.S. Patent No. 8,789,757; U.S. Patent No. 8,789,758;
U.S. Patent No. 8,789,759; U.S. Patent No. 8,794,520;
U.S. Patent No. 8,794,522; U.S. Patent No. 8,794,525;
U.S. Patent No. 8,794,526; U.S. Patent No. 8,798,367;
U.S. Patent No. 8,807,431; U.S. Patent No. 8,807,432;
U.S. Patent No. 8,820,630; U.S. Patent No. 8,822,848;
U.S. Patent No. 8,824,692; U.S. Patent No. 8,824,696;
U.S. Patent No. 8,842,849; U.S. Patent No. 8,844,822;
U.S. Patent No. 8,844,823; U.S. Patent No. 8,849,019;
U.S. Patent No. 8,851,383; U.S. Patent No. 8,854,633;
U.S. Patent No. 8,866,963; U.S. Patent No. 8,868,421;
U.S. Patent No. 8,868,519; U.S. Patent No. 8,868,802;
U.S. Patent No. 8,868,803; U.S. Patent No. 8,870,074;
U.S. Patent No. 8,879,639; U.S. Patent No. 8,880,426;
U.S. Patent No. 8,881,983; U.S. Patent No. 8,881,987;
U.S. Patent No. 8,903,172; U.S. Patent No. 8,908,995;
U.S. Patent No. 8,910,870; U.S. Patent No. 8,910,875;
U.S. Patent No. 8,914,290; U.S. Patent No. 8,914,788;
U.S. Patent No. 8,915,439; U.S. Patent No. 8,915,444;
U.S. Patent No. 8,916,789; U.S. Patent No. 8,918,250;
U.S. Patent No. 8,918,564; U.S. Patent No. 8,925,818;
U.S. Patent No. 8,939,374; U.S. Patent No. 8,942,480;
U.S. Patent No. 8,944,313; U.S. Patent No. 8,944,327;
U.S. Patent No. 8,944,332; U.S. Patent No. 8,950,678;
U.S. Patent No. 8,967,468; U.S. Patent No. 8,971,346;
U.S. Patent No. 8,976,030; U.S. Patent No. 8,976,368;
U.S. Patent No. 8,978,981; U.S. Patent No. 8,978,983;
U.S. Patent No. 8,978,984; U.S. Patent No. 8,985,456;
U.S. Patent No. 8,985,457; U.S. Patent No. 8,985,459;
U.S. Patent No. 8,985,461; U.S. Patent No. 8,988,578;
U.S. Patent No. 8,988,590; U.S. Patent No. 8,991,704;
U.S. Patent No. 8,996,194; U.S. Patent No. 8,996,384;
U.S. Patent No. 9,002,641; U.S. Patent No. 9,007,368;
U.S. Patent No. 9,010,641; U.S. Patent No. 9,015,513;
U.S. Patent No. 9,016,576; U.S. Patent No. 9,022,288;
U.S. Patent No. 9,030,964; U.S. Patent No. 9,033,240;
U.S. Patent No. 9,033,242; U.S. Patent No. 9,036,054;
U.S. Patent No. 9,037,344; U.S. Patent No. 9,038,911;
U.S. Patent No. 9,038,915; U.S. Patent No. 9,047,098;
U.S. Patent No. 9,047,359; U.S. Patent No. 9,047,420;
U.S. Patent No. 9,047,525; U.S. Patent No. 9,047,531;
U.S. Patent No. 9,053,055; U.S. Patent No. 9,053,378;
U.S. Patent No. 9,053,380; U.S. Patent No. 9,058,526;
U.S. Patent No. 9,064,165; U.S. Patent No. 9,064,167;
U.S. Patent No. 9,064,168; U.S. Patent No. 9,064,254;
U.S. Patent No. 9,066,032; U.S. Patent No. 9,070,032;
U.S. Design Patent No. D716,285;
U.S. Design Patent No. D723,560;
U.S. Design Patent No. D730,357;
U.S. Design Patent No. D730,901;
U.S. Design Patent No. D730,902
U.S. Design Patent No. D733,112;
U.S. Design Patent No. D734,339;
International Publication No. 2013/163789;
International Publication No. 2013/173985;
International Publication No. 2014/019130;
International Publication No. 2014/110495;
U.S. Patent Application Publication No. 2008/0185432;
U.S. Patent Application Publication No. 2009/0134221;
U.S. Patent Application Publication No. 2010/0177080;
U.S. Patent Application Publication No. 2010/0177076;
U.S. Patent Application Publication No. 2010/0177707;
U.S. Patent Application Publication No. 2010/0177749;
U.S. Patent Application Publication No. 2010/0265880;
U.S. Patent Application Publication No. 2011/0202554;
U.S. Patent Application Publication No. 2012/0111946;
U.S. Patent Application Publication No. 2012/0168511;
U.S. Patent Application Publication No. 2012/0168512;
U.S. Patent Application Publication No. 2012/0193423;
U.S. Patent Application Publication No. 2012/0203647;
U.S. Patent Application Publication No. 2012/0223141;
U.S. Patent Application Publication No. 2012/0228382;
U.S. Patent Application Publication No. 2012/0248188;
U.S. Patent Application Publication No. 2013/0043312;
U.S. Patent Application Publication No. 2013/0082104;
U.S. Patent Application Publication No. 2013/0175341;
U.S. Patent Application Publication No. 2013/0175343;
U.S. Patent Application Publication No. 2013/0257744;
U.S. Patent Application Publication No. 2013/0257759;
U.S. Patent Application Publication No. 2013/0270346;
U.S. Patent Application Publication No. 2013/0287258;
U.S. Patent Application Publication No. 2013/0292475;
U.S. Patent Application Publication No. 2013/0292477;
U.S. Patent Application Publication No. 2013/0293539;
U.S. Patent Application Publication No. 2013/0293540;
U.S. Patent Application Publication No. 2013/0306728;
U.S. Patent Application Publication No. 2013/0306731;
U.S. Patent Application Publication No. 2013/0307964;
U.S. Patent Application Publication No. 2013/0308625;
U.S. Patent Application Publication No. 2013/0313324;
U.S. Patent Application Publication No. 2013/0313325;
U.S. Patent Application Publication No. 2013/0342717;
U.S. Patent Application Publication No. 2014/0001267;
U.S. Patent Application Publication No. 2014/0008439;
U.S. Patent Application Publication No. 2014/0025584;
U.S. Patent Application Publication No. 2014/0034734;
U.S. Patent Application Publication No. 2014/0036848;
U.S. Patent Application Publication No. 2014/0039693;
U.S. Patent Application Publication No. 2014/0042814;
U.S. Patent Application Publication No. 2014/0049120;
U.S. Patent Application Publication No. 2014/0049635;
U.S. Patent Application Publication No. 2014/0061306;
U.S. Patent Application Publication No. 2014/0063289;
U.S. Patent Application Publication No. 2014/0066136;
U.S. Patent Application Publication No. 2014/0067692;
U.S. Patent Application Publication No. 2014/0070005;
U.S. Patent Application Publication No. 2014/0071840;
U.S. Patent Application Publication No. 2014/0074746;
U.S. Patent Application Publication No. 2014/0076974;
U.S. Patent Application Publication No. 2014/0078341;
U.S. Patent Application Publication No. 2014/0078345;
U.S. Patent Application Publication No. 2014/0097249;
U.S. Patent Application Publication No. 2014/0098792;
U.S. Patent Application Publication No. 2014/0100813;
U.S. Patent Application Publication No. 2014/0103115;
U.S. Patent Application Publication No. 2014/0104413;
U.S. Patent Application Publication No. 2014/0104414;
U.S. Patent Application Publication No. 2014/0104416;
U.S. Patent Application Publication No. 2014/0104451;
U.S. Patent Application Publication No. 2014/0106594;
U.S. Patent Application Publication No. 2014/0106725;
U.S. Patent Application Publication No. 2014/0108010;
U.S. Patent Application Publication No. 2014/0108402;
U.S. Patent Application Publication No. 2014/0110485;
U.S. Patent Application Publication No. 2014/0114530;
U.S. Patent Application Publication No. 2014/0124577;
U.S. Patent Application Publication No. 2014/0124579;
U.S. Patent Application Publication No. 2014/0125842;
U.S. Patent Application Publication No. 2014/0125853;
U.S. Patent Application Publication No. 2014/0125999;
U.S. Patent Application Publication No. 2014/0129378;
U.S. Patent Application Publication No. 2014/0131438;
U.S. Patent Application Publication No. 2014/0131441;
U.S. Patent Application Publication No. 2014/0131443;
U.S. Patent Application Publication No. 2014/0131444;
U.S. Patent Application Publication No. 2014/0131445;
U.S. Patent Application Publication No. 2014/0131448;
U.S. Patent Application Publication No. 2014/0133379;
U.S. Patent Application Publication No. 2014/0136208;
U.S. Patent Application Publication No. 2014/0140585;
U.S. Patent Application Publication No. 2014/0151453;
U.S. Patent Application Publication No. 2014/0152882;
U.S. Patent Application Publication No. 2014/0158770;
U.S. Patent Application Publication No. 2014/0159869;
U.S. Patent Application Publication No. 2014/0166755;
U.S. Patent Application Publication No. 2014/0166759;
U.S. Patent Application Publication No. 2014/0168787;
U.S. Patent Application Publication No. 2014/0175165;
U.S. Patent Application Publication No. 2014/0175172;
U.S. Patent Application Publication No. 2014/0191644;
U.S. Patent Application Publication No. 2014/0191913;
U.S. Patent Application Publication No. 2014/0197238;
U.S. Patent Application Publication No. 2014/0197239;
U.S. Patent Application Publication No. 2014/0197304;
U.S. Patent Application Publication No. 2014/0214631;
U.S. Patent Application Publication No. 2014/0217166;
U.S. Patent Application Publication No. 2014/0217180;
U.S. Patent Application Publication No. 2014/0231500;
U.S. Patent Application Publication No. 2014/0232930;
U.S. Patent Application Publication No. 2014/0247315;
U.S. Patent Application Publication No. 2014/0263493;
U.S. Patent Application Publication No. 2014/0263645;
U.S. Patent Application Publication No. 2014/0267609;
U.S. Patent Application Publication No. 2014/0270196;
U.S. Patent Application Publication No. 2014/0270229;
U.S. Patent Application Publication No. 2014/0278387;
U.S. Patent Application Publication No. 2014/0278391;
U.S. Patent Application Publication No. 2014/0282210;
U.S. Patent Application Publication No. 2014/0284384;
U.S. Patent Application Publication No. 2014/0288933;
U.S. Patent Application Publication No. 2014/0297058;
U.S. Patent Application Publication No. 2014/0299665;
U.S. Patent Application Publication No. 2014/0312121;
U.S. Patent Application Publication No. 2014/0319220;
U.S. Patent Application Publication No. 2014/0319221;
U.S. Patent Application Publication No. 2014/0326787;
U.S. Patent Application Publication No. 2014/0332590;
U.S. Patent Application Publication No. 2014/0344943;
U.S. Patent Application Publication No. 2014/0346233;
U.S. Patent Application Publication No. 2014/0351317;
U.S. Patent Application Publication No. 2014/0353373;
U.S. Patent Application Publication No. 2014/0361073;
U.S. Patent Application Publication No. 2014/0361082;
U.S. Patent Application Publication No. 2014/0362184;
U.S. Patent Application Publication No. 2014/0363015;
U.S. Patent Application Publication No. 2014/0369511;
U.S. Patent Application Publication No. 2014/0374483;
U.S. Patent Application Publication No. 2014/0374485;
U.S. Patent Application Publication No. 2015/0001301;
U.S. Patent Application Publication No. 2015/0001304;
U.S. Patent Application Publication No. 2015/0003673;
U.S. Patent Application Publication No. 2015/0009338;
U.S. Patent Application Publication No. 2015/0009610;
U.S. Patent Application Publication No. 2015/0014416;
U.S. Patent Application Publication No. 2015/0021397;
U.S. Patent Application Publication No. 2015/0028102;
U.S. Patent Application Publication No. 2015/0028103;
U.S. Patent Application Publication No. 2015/0028104;
U.S. Patent Application Publication No. 2015/0029002;
U.S. Patent Application Publication No. 2015/0032709;
U.S. Patent Application Publication No. 2015/0039309;
U.S. Patent Application Publication No. 2015/0039878;
U.S. Patent Application Publication No. 2015/0040378;
U.S. Patent Application Publication No. 2015/0048168;
U.S. Patent Application Publication No. 2015/0049347;
U.S. Patent Application Publication No. 2015/0051992;
U.S. Patent Application Publication No. 2015/0053766;
U.S. Patent Application Publication No. 2015/0053768;
U.S. Patent Application Publication No. 2015/0053769;
U.S. Patent Application Publication No. 2015/0060544;
U.S. Patent Application Publication No. 2015/0062366;
U.S. Patent Application Publication No. 2015/0063215;
U.S. Patent Application Publication No. 2015/0063676;
U.S. Patent Application Publication No. 2015/0069130;
U.S. Patent Application Publication No. 2015/0071819;
U.S. Patent Application Publication No. 2015/0083800;
U.S. Patent Application Publication No. 2015/0086114;
U.S. Patent Application Publication No. 2015/0088522;
U.S. Patent Application Publication No. 2015/0096872;
U.S. Patent Application Publication No. 2015/0099557;
U.S. Patent Application Publication No. 2015/0100196;
U.S. Patent Application Publication No. 2015/0102109;
U.S. Patent Application Publication No. 2015/0115035;
U.S. Patent Application Publication No. 2015/0127791;
U.S. Patent Application Publication No. 2015/0128116;
U.S. Patent Application Publication No. 2015/0129659;
U.S. Patent Application Publication No. 2015/0133047;
U.S. Patent Application Publication No. 2015/0134470;
U.S. Patent Application Publication No. 2015/0136851;
U.S. Patent Application Publication No. 2015/0136854;
U.S. Patent Application Publication No. 2015/0142492;
U.S. Patent Application Publication No. 2015/0144692;
U.S. Patent Application Publication No. 2015/0144698;
U.S. Patent Application Publication No. 2015/0144701;
U.S. Patent Application Publication No. 2015/0149946;
U.S. Patent Application Publication No. 2015/0161429;
U.S. Patent Application Publication No. 2015/0169925;
U.S. Patent Application Publication No. 2015/0169929;
U.S. Patent Application Publication No. 2015/0178523;
U.S. Patent Application Publication No. 2015/0178534;
U.S. Patent Application Publication No. 2015/0178535;
U.S. Patent Application Publication No. 2015/0178536;
U.S. Patent Application Publication No. 2015/0178537;
U.S. Patent Application Publication No. 2015/0181093;
U.S. Patent Application Publication No. 2015/0181109;
U.S. Patent Application No. 13/367,978 for a *Laser Scanning Module Employing an Elastomeric U-Hinge Based Laser Scanning Assembly,* filed February 7, 2012 (Feng et *al.*);
U.S. Patent Application No. 29/458,405 for an *Electronic Device,* filed June 19, 2013 (Fitch et *al.*);
U.S. Patent Application No. 29/459,620 for an *Electronic Device Enclosure,* filed July 2, 2013 (London et *al.*);
U.S. Patent Application No. 29/468,118 for an *Electronic Device Case,* filed September 26, 2013 (Oberpriller et *al.*);
U.S. Patent Application No. 14/150,393 for *Indicia-reader Having Unitary Construction Scanner,* filed January 8, 2014 (Colavito et *al.*);
U.S. Patent Application No. 14/200,405 for *Indicia Reader for Size-Limited Applications* filed March 7, 2014 (Feng et *al.*);
U.S. Patent Application No. 14/231,898 for *Hand-Mounted Indicia-Reading Device with Finger Motion Triggering* filed April 1, 2014 (Van Horn *et al.*);
U.S. Patent Application No. 29/486,759 for an Imaging Terminal, filed April 2, 2014 (Oberpriller et al.);
U.S. Patent Application No. 14/257,364 for *Docking System and Method Using Near Field Communication* filed April 21, 2014 (Showering);
U.S. Patent Application No. 14/264,173 for *Autofocus Lens System for Indicia Readers* filed April 29, 2014 (Ackley *et al.*);
U.S. Patent Application No. 14/277,337 *for MULTIPURPOSE OPTICAL READER, filed May 14, 2014 (Jovanovski et al.);*
U.S. Patent Application No. 14/283,282 *for TERMINAL HAVING ILLUMINATION AND FOCUS CONTROL filed May 21, 2014 (Liu* et *al.*);
U.S. Patent Application No. 14/327,827 for a MOBILE-PHONE ADAPTER FOR ELECTRONIC TRANSACTIONS, filed July 10, 2014 (Hejl);
U.S. Patent Application No. 14/334,934 for a SYSTEM AND METHOD FOR INDICIA VERIFICATION, filed July 18, 2014 (Hejl);
U.S. Patent Application No. 14/339,708 for LASER SCANNING CODE SYMBOL READING SYSTEM, filed July 24, 2014 (Xian et al.);
U.S. Patent Application No. 14/340,627 for an AXIALLY REINFORCED FLEXIBLE SCAN ELEMENT, filed July 25, 2014 (Rueblinger et al.);
U.S. Patent Application No. 14/446,391 for MULTIFUNCTION POINT OF SALE APPARATUS WITH OPTICAL SIGNATURE CAPTURE filed July 30, 2014 (Good et al.);
U.S. Patent Application No. 14/452,697 for INTERACTIVE INDICIA READER, filed August 6, 2014 (Todeschini);
U.S. Patent Application No. 14/453,019 for DIMENSIONING SYSTEM WITH GUIDED ALIGNMENT, filed August 6, 2014 (Li et al.);
U.S. Patent Application No. 14/462,801 for MOBILE COMPUTING DEVICE WITH DATA COGNITION SOFTWARE, filed on August 19, 2014 (Todeschini et al.);
U.S. Patent Application No. 14/483,056 for VARIABLE DEPTH OF FIELD BARCODE SCANNER filed Sep. 10, 2014 (McCloskey et al.);
U.S. Patent Application No. 14/513,808 for IDENTIFYING INVENTORY ITEMS IN A STORAGE FACILITY filed Oct. 14, 2014 (Singel et al.);
U.S. Patent Application No. 14/519,195 for HANDHELD DIMENSIONING SYSTEM WITH FEEDBACK filed Oct. 21, 2014 (Laffargue et al.);
U.S. Patent Application No. 14/519,179 for DIMENSIONING SYSTEM WITH MULTIPATH INTERFERENCE MITIGATION filed Oct. 21, 2014 (Thuries et al.);
U.S. Patent Application No. 14/519,211 for SYSTEM AND METHOD FOR DIMENSIONING filed Oct. 21, 2014 (Ackley et al.);
U.S. Patent Application No. 14/519,233 for HANDHELD DIMENSIONER WITH DATA-QUALITY INDICATION filed Oct. 21, 2014 (Laffargue et al.);
U.S. Patent Application No. 14/519,249 for HANDHELD DIMENSIONING SYSTEM WITH MEASUREMENT-CONFORMANCE FEEDBACK filed Oct. 21, 2014 (Ackley et al.);
U.S. Patent Application No. 14/527,191 for METHOD AND SYSTEM FOR RECOGNIZING SPEECH USING WILDCARDS IN AN EXPECTED RESPONSE filed Oct. 29, 2014 (Braho et al.);
U.S. Patent Application No. 14/529,563 for ADAPTABLE INTERFACE FOR A MOBILE COMPUTING DEVICE filed Oct. 31, 2014 (Schoon et al.);
U.S. Patent Application No. 14/529,857 for BARCODE READER WITH SECURITY FEATURES filed October 31, 2014 (Todeschini et al.);
U.S. Patent Application No. 14/398,542 for PORTABLE ELECTRONIC DEVICES HAVING A SEPARATE LOCATION TRIGGER UNIT FOR USE IN CONTROLLING AN APPLICATION UNIT filed November 3, 2014 (Bian et al.);
U.S. Patent Application No. 14/531,154 for DIRECTING AN INSPECTOR THROUGH AN INSPECTION filed Nov. 3, 2014 (Miller et al.);
U.S. Patent Application No. 14/533,319 for BARCODE SCANNING SYSTEM USING WEARABLE DEVICE WITH EMBEDDED CAMERA filed Nov. 5, 2014 (Todeschini);
U.S. Patent Application No. 14/535,764 for CONCATENATED EXPECTED RESPONSES FOR SPEECH RECOGNITION filed Nov. 7, 2014 (Braho et al.);
U.S. Patent Application No. 14/568,305 for AUTO-CONTRAST VIEWFINDER FOR AN INDICIA READER filed Dec. 12, 2014 (Todeschini);
U.S. Patent Application No. 14/573,022 for DYNAMIC DIAGNOSTIC INDICATOR GENERATION filed Dec. 17, 2014 (Goldsmith);
U.S. Patent Application No. 14/578,627 for SAFETY SYSTEM AND METHOD filed Dec. 22, 2014 (Ackley et al.);
U.S. Patent Application No. 14/580,262 for MEDIA GATE FOR THERMAL TRANSFER PRINTERS filed Dec. 23, 2014 (Bowles);
U.S. Patent Application No. 14/590,024 for SHELVING AND PACKAGE LOCATING SYSTEMS FOR DELIVERY VEHICLES filed January 6, 2015 (Payne);
U.S. Patent Application No. 14/596,757 for SYSTEM AND METHOD FOR DETECTING BARCODE PRINTING ERRORS filed Jan. 14, 2015 (Ackley);
U.S. Patent Application No. 14/416,147 for OPTICAL READING APPARATUS HAVING VARIABLE SETTINGS filed January 21, 2015 (Chen et al.);
U.S. Patent Application No. 14/614,706 for DEVICE FOR SUPPORTING AN ELECTRONIC TOOL ON A USER'S HAND filed Feb. 5, 2015 (Oberpriller et al.);
U.S. Patent Application No. 14/614,796 for CARGO APPORTIONMENT TECHNIQUES filed Feb. 5, 2015 (Morton et al.);
U.S. Patent Application No. 29/516,892 for TABLE COMPUTER filed Feb. 6, 2015 (Bidwell et al.);
U.S. Patent Application No. 14/619,093 for METHODS FOR TRAINING A SPEECH RECOGNITION SYSTEM filed Feb. 11, 2015 (Pecorari);
U.S. Patent Application No. 14/628,708 for DEVICE, SYSTEM, AND METHOD FOR DETERMINING THE STATUS OF CHECKOUT LANES filed Feb. 23, 2015 (Todeschini);
U.S. Patent Application No. 14/630,841 for TERMINAL INCLUDING IMAGING ASSEMBLY filed Feb. 25, 2015 (Gomez et al.);
U.S. Patent Application No. 14/635,346 for SYSTEM AND METHOD FOR RELIABLE STORE-AND-FORWARD DATA HANDLING BY ENCODED INFORMATION READING TERMINALS filed March 2, 2015 (Sevier);
U.S. Patent Application No. 29/519,017 for SCANNER filed March 2, 2015 (Zhou et al.);
U.S. Patent Application No. 14/405,278 for DESIGN PATTERN FOR SECURE STORE filed March 9, 2015 (Zhu et al.);
U.S. Patent Application No. 14/660,970 for DECODABLE INDICIA READING TERMINAL WITH COMBINED ILLUMINATION filed March 18, 2015 (Kearney et al.);
U.S. Patent Application No. 14/661,013 for REPROGRAMMING SYSTEM AND METHOD FOR DEVICES INCLUDING PROGRAMMING SYMBOL filed March 18, 2015 (Soule et al.);
U.S. Patent Application No. 14/662,922 for MULTIFUNCTION POINT OF SALE SYSTEM filed March 19, 2015 (Van Horn et al.);
U.S. Patent Application No. 14/663,638 for VEHICLE MOUNT COMPUTER WITH CONFIGURABLE IGNITION SWITCH BEHAVIOR filed March 20, 2015 (Davis et al.);
U.S. Patent Application No. 14/664,063 for METHOD AND APPLICATION FOR SCANNING A BARCODE WITH A SMART DEVICE WHILE CONTINUOUSLY RUNNING AND DISPLAYING AN APPLICATION ON THE SMART DEVICE DISPLAY filed March 20, 2015 (Todeschini);
U.S. Patent Application No. 14/669,280 for TRANSFORMING COMPONENTS OF A WEB PAGE TO VOICE PROMPTS filed March 26, 2015 (Funyak et al.);
U.S. Patent Application No. 14/674,329 for AIMER FOR BARCODE SCANNING filed March 31, 2015 (Bidwell);
U.S. Patent Application No. 14/676,109 for INDICIA READER filed April 1, 2015 (Huck);
U.S. Patent Application No. 14/676,327 for DEVICE MANAGEMENT PROXY FOR SECURE DEVICES filed April 1, 2015 (Yeakley et al.);
U.S. Patent Application No. 14/676,898 for NAVIGATION SYSTEM CONFIGURED TO INTEGRATE MOTION SENSING DEVICE INPUTS filed April 2, 2015 (Showering);
U.S. Patent Application No. 14/679,275 for DIMENSIONING SYSTEM CALIBRATION SYSTEMS AND METHODS filed April 6, 2015 (Laffargue et al.);
U.S. Patent Application No. 29/523,098 for HANDLE FOR A TABLET COMPUTER filed April 7, 2015 (Bidwell et al.);
U.S. Patent Application No. 14/682,615 for SYSTEM AND METHOD FOR POWER MANAGEMENT OF MOBILE DEVICES filed April 9, 2015 (Murawski et al.);
U.S. Patent Application No. 14/686,822 for MULTIPLE PLATFORM SUPPORT SYSTEM AND METHOD filed April 15, 2015 (Qu et al.);
U.S. Patent Application No. 14/687,289 for SYSTEM FOR COMMUNICATION VIA A PERIPHERAL HUB filed April 15, 2015 (Kohtz et al.);
U.S. Patent Application No. 29/524,186 for SCANNER filed April 17, 2015 (Zhou et al.);
U.S. Patent Application No. 14/695,364 for MEDICATION MANAGEMENT SYSTEM filed April 24, 2015 (Sewell et al.);
U.S. Patent Application No. 14/695,923 for SECURE UNATTENDED NETWORK AUTHENTICATION filed April 24, 2015 (Kubler et al.);
U.S. Patent Application No. 29/525,068 for TABLET COMPUTER WITH REMOVABLE SCANNING DEVICE filed April 27, 2015 (Schulte et al.);
U.S. Patent Application No. 14/699,436 for SYMBOL READING SYSTEM HAVING PREDICTIVE DIAGNOSTICS filed April 29, 2015 (Nahill et al.);
U.S. Patent Application No. 14/702,110 for SYSTEM AND METHOD FOR REGULATING BARCODE DATA INJECTION INTO A RUNNING APPLICATION ON A SMART DEVICE filed May 1, 2015 (Todeschini et al.);
U.S. Patent Application No. 14/702,979 for TRACKING BATTERY CONDITIONS filed May 4, 2015 (Young et al.);
U.S. Patent Application No. 14/704,050 for INTERMEDIATE LINEAR POSITIONING filed May 5, 2015 (Charpentier et al.);
U.S. Patent Application No. 14/705,012 for HANDS-FREE HUMAN MACHINE INTERFACE RESPONSIVE TO A DRIVER OF A VEHICLE filed May 6, 2015 (Fitch et al.);
U.S. Patent Application No. 14/705,407 for METHOD AND SYSTEM TO PROTECT SOFTWARE-BASED NETWORK-CONNECTED DEVICES FROM ADVANCED PERSISTENT THREAT filed May 6, 2015 (Hussey et al.);
U.S. Patent Application No. 14/707,037 for SYSTEM AND METHOD FOR DISPLAY OF INFORMATION USING A VEHICLE-MOUNT COMPUTER filed May 8, 2015 (Chamberlin);
U.S. Patent Application No. 14/707,123 for APPLICATION INDEPENDENT DEX/UCS INTERFACE filed May 8, 2015 (Pape);
U.S. Patent Application No. 14/707,492 for METHOD AND APPARATUS FOR READING OPTICAL INDICIA USING A PLURALITY OF DATA SOURCES filed May 8, 2015 (Smith et al.);
U.S. Patent Application No. 14/710,666 for PRE-PAID USAGE SYSTEM FOR ENCODED INFORMATION READING TERMINALS filed May 13, 2015 (Smith);
U.S. Patent Application No. 29/526,918 for CHARGING BASE filed May 14, 2015 (Fitch et al.);
U.S. Patent Application No. 14/715,672 for AUGUMENTED REALITY ENABLED HAZARD DISPLAY filed May 19, 2015 (Venkatesha et al.);
U.S. Patent Application No. 14/715,916 for EVALUATING IMAGE VALUES filed May 19, 2015 (Ackley);
U.S. Patent Application No. 14/722,608 for INTERACTIVE USER INTERFACE FOR CAPTURING A DOCUMENT IN AN IMAGE SIGNAL filed May 27, 2015 (Showering et al.);
U.S. Patent Application No. 29/528,165 for IN-COUNTER BARCODE SCANNER filed May 27, 2015 (Oberpriller et al.);
U.S. Patent Application No. 14/724,134 for ELECTRONIC DEVICE WITH WIRELESS PATH SELECTION CAPABILITY filed May 28, 2015 (Wang et al.);
U.S. Patent Application No. 14/724,849 for METHOD OF PROGRAMMING THE DEFAULT CABLE INTERFACE SOFTWARE IN AN INDICIA READING DEVICE filed May 29, 2015 (Barten);
U.S. Patent Application No. 14/724,908 for IMAGING APPARATUS HAVING IMAGING ASSEMBLY filed May 29, 2015 (Barber et al.);
U.S. Patent Application No. 14/725,352 for APPARATUS AND METHODS FOR MONITORING ONE OR MORE PORTABLE DATA TERMINALS (Caballero et al.);
U.S. Patent Application No. 29/528,590 for ELECTRONIC DEVICE filed May 29, 2015 (Fitch et al.);
U.S. Patent Application No. 29/528,890 for MOBILE COMPUTER HOUSING filed June 2, 2015 (Fitch et al.);
U.S. Patent Application No. 14/728,397 for DEVICE MANAGEMENT USING VIRTUAL INTERFACES CROSS-REFERENCE TO RELATED APPLICATIONS filed June 2, 2015 (Caballero);
U.S. Patent Application No. 14/732,870 for DATA COLLECTION MODULE AND SYSTEM filed June 8, 2015 (Powilleit);
U.S. Patent Application No. 29/529,441 for INDICIA READING DEVICE filed June 8, 2015 (Zhou et al.);
U.S. Patent Application No. 14/735,717 for INDICIA-READING SYSTEMS HAVING AN INTERFACE WITH A USER'S NERVOUS SYSTEM filed June 10, 2015 (Todeschini);
U.S. Patent Application No. 14/738,038 for METHOD OF AND SYSTEM FOR DETECTING OBJECT WEIGHING INTERFERENCES filed June 12, 2015 (Amundsen et al.);
U.S. Patent Application No. 14/740,320 for TACTILE SWITCH FOR A MOBILE ELECTRONIC DEVICE filed June 16, 2015 (Bandringa);
U.S. Patent Application No. 14/740,373 for CALIBRATING A VOLUME DIMENSIONER filed June 16, 2015 (Ackley et al.);
U.S. Patent Application No. 14/742,818 for INDICIA READING SYSTEM EMPLOYING DIGITAL GAIN CONTROL filed June 18, 2015 (Xian et al.);
U.S. Patent Application No. 14/743,257 for WIRELESS MESH POINT PORTABLE DATA TERMINAL filed June 18, 2015 (Wang et al.);
U.S. Patent Application No. 29/530,600 for CYCLONE filed June 18, 2015 (Vargo et al);
U.S. Patent Application No. 14/744,633 for IMAGING APPARATUS COMPRISING IMAGE SENSOR ARRAY HAVING SHARED GLOBAL SHUTTER CIRCUITRY filed June 19, 2015 (Wang);
U.S. Patent Application No. 14/744,836 for CLOUD-BASED SYSTEM FOR READING OF DECODABLE INDICIA filed June 19, 2015 (Todeschini et al.);
U.S. Patent Application No. 14/745,006 for SELECTIVE OUTPUT OF DECODED MESSAGE DATA filed June 19, 2015 (Todeschini et al.);
U.S. Patent Application No. 14/747,197 for OPTICAL PATTERN PROJECTOR filed June 23, 2015 (Thuries et al.);
U.S. Patent Application No. 14/747,490 for DUAL-PROJECTOR THREE-DIMENSIONAL SCANNER filed June 23, 2015 (Jovanovski et al.);and
U.S. Patent Application No. 14/748,446 for CORDLESS INDICIA READER WITH A MULTIFUNCTION COIL FOR WIRELESS CHARGING AND EAS DEACTIVATION, filed June 24, 2015 (Xie et al.).

In the specification and/or figures, typical embodiments of the invention have been disclosed. The present invention is not limited to such exemplary embodiments. The use of the term "and/or" includes any and all combinations of one or more of the associated listed items. The figures are schematic representations and so are not necessarily drawn to scale. Unless otherwise noted, specific terms have been used in a generic and descriptive sense and not for purposes of limitation.

## Claims

1. A self-calibrating projection apparatus, comprising:
a projector having a memory;
an image scanner;
a calibration image, the calibration image having predetermined optimal quality characteristics, the calibration image residing in the projector memory; and
a controller for analyzing quality characteristics of projected images and for changing projector settings, the controller being communicatively linked to the image scanner and to the projector;
the projector being configured to project the calibration image on a surface upon being activated;
the image scanner being configured to acquire the projected calibration image and to transfer the acquired image to the controller;
the controller being configured to analyze the quality characteristics of the projected calibration image in comparison to the predetermined optimal quality characteristics; and
the controller being configured to change projector settings to adjust the calibration image to meet the optimal quality characteristics based upon the controller analyzing the quality characteristics.

2. The self-calibrating projection apparatus of claim 1, wherein: the projector being configured to project the calibration image upon being activated, the image scanner being configured to acquire the projected calibration image and to transfer the sensed the acquired image to the controller, the controller being configured to analyze the quality characteristics of the projected calibration image in comparison to the predetermined optimal quality characteristics, and the controller being configured to change the projector settings to adjust the calibration image to meet the optimal quality characteristics, constitute a routine; and wherein the routine is repeated until the quality characteristics of the projected calibration image are substantially similar to the optimal quality characteristics of the calibration image.

3. The self-calibrating projection apparatus of claim 1, wherein the predetermined quality characteristics include focus, brightness, contrast, hue, tint, keystone, and color combination.

4. The self-calibrating projection apparatus of claim 1, wherein the controller is provided with an algorithm to analyze the projected calibration image quality characteristics with predetermined optimal quality characteristics.

5. The self-calibrating projection apparatus of claim 1, wherein the controller is a central processing unit.

6. The self-calibrating projection apparatus of claim 1, wherein the controller is comprised of multiple controllers.

7. The self-calibrating projection apparatus of claim 1, wherein the controller is comprised of a projection controller and an image-capture controller, the projection controller being resident in the projector, the image-capture controller being resident in the image scanner; the image-capture controller being configured to analyze the quality characteristics of the projected calibration image; the image-capture controller being configured to send commands to the projection controller based upon analyzing the projected calibration image quality characteristics in comparison to the predetermined optimal quality characteristics of the calibration image; and the projection controller being configured to change projector settings based upon the commands from the image-capture controller.

8. The self-calibrating projection apparatus of claim 4, wherein the controller is comprised of a primary controller and at least one auxiliary controller; the primary controller being configured to implement the algorithm; the algorithm being further configured for automated adjustment of the projector settings based on the algorithm analysis.

9. The self-calibrating projection apparatus of claim 4, wherein the algorithm is provided with means of activation; the activation means being selected from a user action and an automatic action based upon the projector being activated.

10. The self-calibrating projection apparatus of claim 7, wherein the projector and the image scanner are communicatively linked discrete devices.

11. The self-calibrating projection apparatus of claim 1, wherein the image scanner includes an image sensor for acquiring projected images.

12. The self-calibrating projection apparatus of claim 1, wherein the image scanner is provided with barcode scanning capability.

13. A process for automatically calibrating a projection device, comprising the steps of:
projecting a calibration image onto a surface, the calibration image having predetermined optimal quality characteristics;
acquiring the projected calibration image with an image-scanner;
sending the acquired image to a controller;
analyzing the quality characteristics of the acquired projected calibration image in comparison to the predetermined optimal quality characteristics of the calibration image; and
changing the projector settings to adjust the calibration image to meet the optimal quality characteristics based on the analyzing step.

14. The process of claim 13, further comprising the step of: repeating the process until the quality characteristics of the projected calibration image are substantially similar to the predetermined optimal quality characteristics of the calibration image.

15. The process of claim 13, wherein the optimal quality characteristics include focus, brightness, contrast, hue, tint, keystone, and color combination; and wherein the analyzing step is accomplished by an algorithm provided to the controller.
